# EUROPEAN PATENT APPLICATION

(11) **EP 2 503 217 A1**
(43) Date of publication of application: **26.09.2012**
(21) Application number: 10840871.7
(22) Date of filing: 13.12.2010
(51) Int. Cl.: F21S 2/00, G02F 1/1333, G02F 1/13357, F21Y 101/02

(54) **LIGHTING DEVICE, DISPLAY DEVICE, AND TELEVISION RECEIVER DEVICE**

(30) Priority: 28.12.2009 JP 2009297710
(71) Applicant: Sharp Kabushiki Kaisha, Osaka-shi, Osaka 545-8522 (JP)
(72) Inventor: TAKANO, Yuya, Osaka-shi, Osaka 545-8522 (JP)
(74) Representative: Müller-Boré & Partner Patentanwälte
(86) International application number: PCT/JP2010/072336
(87) International publication number: WO 2011/081013

(57) **Abstract**

In a lighting device including a chassis housing a reflection sheet, the reflection sheet is reliably positioned with respect to the chassis and overcomes a flexure or wrinkle from the reflection sheet. In an edge light-type backlight unit 24, a reflection sheet 26 has a reflection sheet-side recess 26s on a first side 26a close to an LED unit 32 and a reflection sheet projected portion 26t on second sides 26b perpendicular to the first side 26a. A backlight chassis 22 has a chassis-side recess 22s and a chassis-side projected portion 22t projecting toward a surface opposite to a light exit surface of a light guide plate 20 and having a projected top surface facing the opposite surface. The reflection sheet-side recess 26t is fitted to the chassis-side projected portion 22s with a gap therebetween and the chassis-side recess 22t is fitted to the reflection sheet-side projected portion 26s with a gap therebetween.

## Description

### TECHNICAL FIELD

The present invention relates to a lighting device, a display device and a television receiver.

### BACKGROUND ART

In recent years, image display devices including a television receiver are shifting from conventional cathode-ray tubes to thin display devices including thin display elements, such as a liquid crystal panel and a plasma display panel. This enables the image display devices to be thinner. The liquid crystal panel included in the liquid crystal display device does not emit light, and thus a backlight unit is required as a separate lighting device.

The backlight unit includes a light source, a light guide plate that guides light from the light source, a reflection sheet, and a chassis. The reflection sheet is provided along a plate surface of the light guide plate that is opposite from a light exit surface thereof. The reflection sheet reflects light that leaks from the light guide plate back into the light guide plate. The chassis houses the light source, the light guide plate and the reflection sheet therein. The light guide plate is supported by the chassis to be positioned with respect to the chassis. The reflection sheet is fixed to the light guide plate by a double-sided tape, for example. Accordingly, the reflection sheet is positioned with respect to the chassis.

In such a backlight unit, the reflection sheet may be thermally deformed due to heat generated when the light source emits light. This may cause warping or wrinkles in the reflection sheet. If warping or wrinkles is causes in the reflection sheet, uneven brightness may be caused in the light exited from the light exit surface of the light guide plate.

Patent document 1 discloses a backlight unit including a reflection sheet that can be positioned with respect to the chassis and does not cause warping or wrinkles due to thermal deformation. In the backlight unit, the reflection sheet includes projecting portions on two sides that cross a side of the reflection sheet that expose to the light source side. Each of the projecting portions projects so as to be away from the reflection sheet. The light guide plate also includes projecting portions corresponding to the projecting portions of the reflection sheet. The projecting portion of the light guide plate is provided along a thickness direction of the light guide plate. The chassis includes recess portions each corresponding to each of the projecting portions of the reflection sheet and the light guide plate. Each of the recess portions is recessed so as to be away from the reflection sheet and the light guide plate. The projecting portions provided on the reflection sheet and the light guide plate are fitted to the corresponding recess portions of the chassis with a gap. Accordingly, the reflection sheet and the light guide plate are positioned with respect to the chassis. In the backlight unit of Patent Document 1, even if warping or wrinkles is caused in the reflection sheet, the warping or wrinkles are absorbed by the gap formed between the reflection sheet and the chassis.

[Patent Document 1] Japanese Unexamined Patent Publication No. 2008-198540

### Problem to be Solved by the Invention

However, in the backlight unit of Patent Document 1, the reflection sheet is positioned with respect to the chassis only in one direction that is perpendicular to the side of the reflection sheet that is exposed to the light source side. Therefore, the reflection sheet is not surely positioned with respect to the chassis.

### DISCLOSURE OF THE PRESENT INVENTION

The present technology was accomplished in view of the above circumstances. It is an object of the present technology to provide a lighting device in which a reflection sheet is surely positioned with respect to the chassis and warping or wrinkles is not caused in the reflection sheet. It is another object to provide a display device including such a lighting device and a television receiver including such a display device.

### Means for Solving the Problem

A technique disclosed in the present specification relates to a lighting device including a light source, a light guide plate, a reflection sheet and a chassis. The light guide plate has a side surface facing the light source as a light entrance surface through which light from the light source enters , a plate surface as a light exit surface from which light entering through the light entrance surface exit to outside, and an opposite surface that is a surface opposite to the light exit surface. The reflection sheet has substantially a rectangular plan view shape and arranged on an opposite surface side of the light guide plate. The chassis houses the light source, the light guide plate and the reflection sheet and is configured to support the light guide plate. The reflection sheet includes a first side and a second side and the first side faces the light source and the second side is perpendicular to the first side. The reflection sheet has a reflection sheet-side recess on the first side and has a reflection sheet-side projected portion on the second side. The reflection sheet-side recess is partially recessed from the first side and the reflection sheet-side projected portion is partially projected from the second side. The chassis includes a chassis-side recess and a chassis-side projected portion having a projected top surface, and the chassis-side recess faces the reflection sheet-side projected portion and is recessed so as to be far away from the reflection sheet, and the chassis-side projected portion faces the reflection sheet-side recess and is projected toward the opposite surface of the light guide plate and the projected top surface faces the opposite surface. The reflection sheet-side projected portion is fitted to the chassis-side recess with a gap therebetween and the chassis-side projected portion is fitted to the reflection sheet-side recess with a gap therebetween.

According to the above lighting device, a side of the reflection sheet that is perpendicular to a side facing the light source is fitted to the chassis and the side of the reflection sheet that faces the light source is also fitted to the chassis. Therefore, the reflection sheet is positioned with respect to the chassis in two orthogonal directions. With this configuration, the reflection sheet is reliably positioned with respect to the chassis. Furthermore, the reflection sheet and the chassis are fitted to each other with a gap therebetween. Thus, even if a flexure or wrinkle occurs in the reflection sheet, it is possible to overcome the flexure or wrinkle caused in the reflection sheet.

In the above lighting device, the light guide plate may be substantially greater in a plan view size than the reflection sheet and an outer edge of the reflection sheet-side projected portion may be projected from an outer edge of the light guide plate. With this configuration, a sufficient gap is provided between the reflection sheet and the chassis. Therefore, in each side of the reflection sheet, it is possible to reliably overcome a flexure or wrinkle caused in the reflection sheet.

In the above lighting device, the reflection sheet may further has a third side that is opposite to the first side and the reflection sheet-side recess and the reflection sheet-side projected portion may be provided only on the first side and the second side. With this configuration, the third side is not fitted to the chassis. Therefore, even if a flexure or wrinkle occurs in the reflection sheet due to thermal deformation, it is possible to effectively overcome this flexure or wrinkle on the side of the third side.

In the above lighting device, the reflection sheet-side projected portion may be arranged on a portion of the second side that is closer to the light source than a middle portion of the second side. In the fitting portion between the reflection sheet and the chassis, light loss is likely to occur. However, with this configuration, the fitting part between the reflection sheet and the chassis can be provided near the light source, resulting in reduction of light loss.

In the above lighting device, at least two reflection sheet-side projected portions may be provided on the second side. With this configuration, it is possible to increase the number of fitting portions between the reflection sheet and the chassis, and the reflection sheet is reliably positioned with respect to the chassis.

The above lighting device may further include a reflection member provided between the light source and the light guide plate. In the above lighting device, the light entrance surface may have an elongated shape and the reflection member may be arranged along a longitudinal direction of the light entrance surface. With this configuration, light scattered from the light source to the outside of the light guide plate enters the light guide plate by the first reflection sheet. With this configuration, it is possible to increase the light entering efficiency from the light source to the light guide plate.

The above lighting device may further include a lens member configured to cover a light exit side of the light source. In the above lighting device, the light source may be a planer light source and the lens member may be hemispherical to be convex toward the light entrance surface. With this configuration, light emitted from the light source is diffused over a wide range by the lens member. Therefore, light having uniform brightness enters the entire light entrance surface of the light guide plate.

The technique disclosed in the present specification can be realized as a display device including a display panel that performs display using a light from the above lighting device. A display device having a liquid crystal panel using a liquid crystal as the display panel is novel and useful. Also, a television receiver having the above display device is novel and useful. In the above display device and television receiver, it is possible to realize a larger display region.

### Advantageous Effect of the Invention

According to the technique disclosed in the present specification, in a lighting device having a chassis housing a reflection sheet, the reflection sheet is reliably positioned with respect to the chassis and overcomes a flexure or wrinkle caused in the reflection sheet.

### BRIEF DESCRIPTION OF THE DRAWINGS

FIG. 1 is an exploded perspective view of a television receiver TV according to the first embodiment;
FIG. 2 is a vertical cross-sectional view of a liquid crystal display device 10;
FIG. 3 is a front view of a backlight unit 24;
FIG. 4 is a cross-sectional view of a part of the backlight unit 24;
FIG. 5 is a cross-sectional view of a part of the backlight unit 24;
FIG. 6 is a cross-sectional view of a part of the backlight unit 24;
FIG. 7 is a cross-sectional view of a part of the backlight unit 24 according to the second embodiment;
FIG. 8 is an exploded perspective view of a liquid crystal display device 110 according to the third embodiment;
FIG. 9 is a vertical cross-sectional view of the liquid crystal display device 110; and
FIG. 10 is a cross-sectional view of a part of the backlight unit 124.

### BEST MODE FOR CARRYING OUT THE INVENTION

### <First embodiment>

Embodiments will be explained with reference to the drawings. It is noted that the X, Y and Z axis are illustrated in some of the figures such that each axis direction is common throughout the drawings. Among these, the Y axis direction corresponds to the vertical direction and the X axis direction corresponds to the horizontal direction. Also, if not otherwise specified, description about an up-and-down direction is based on the vertical direction.

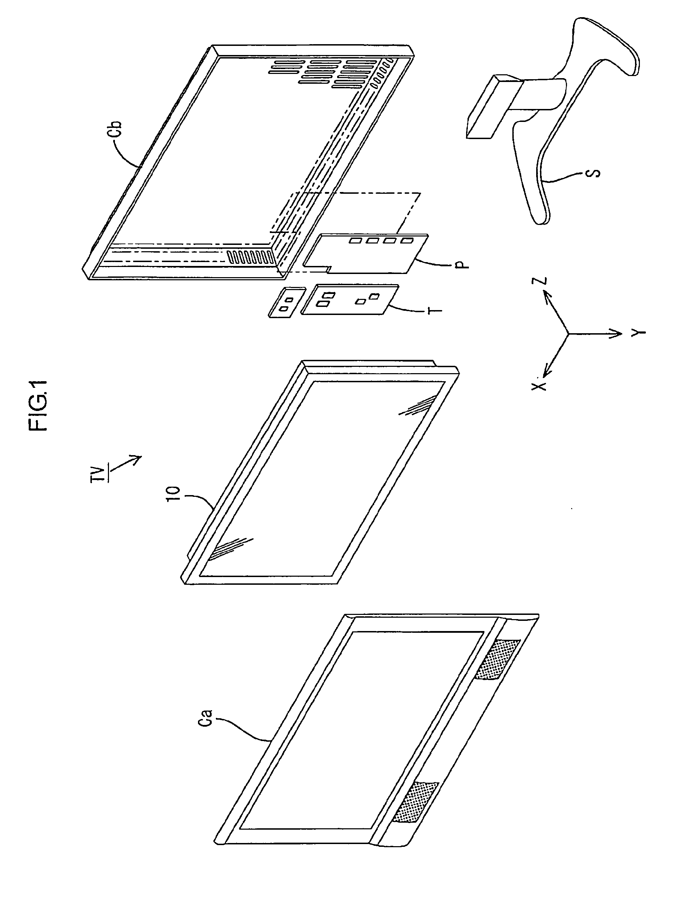

FIG. 1 is an exploded perspective view of a television receiver TV according to the first embodiment. As illustrated in FIG. 1, the television receiver TV has the liquid crystal display device 10, front and rear cabinets Ca and Cb housing the liquid crystal display device 10 sandwiched therebetween, a power source P, a tuner T and a stand S.

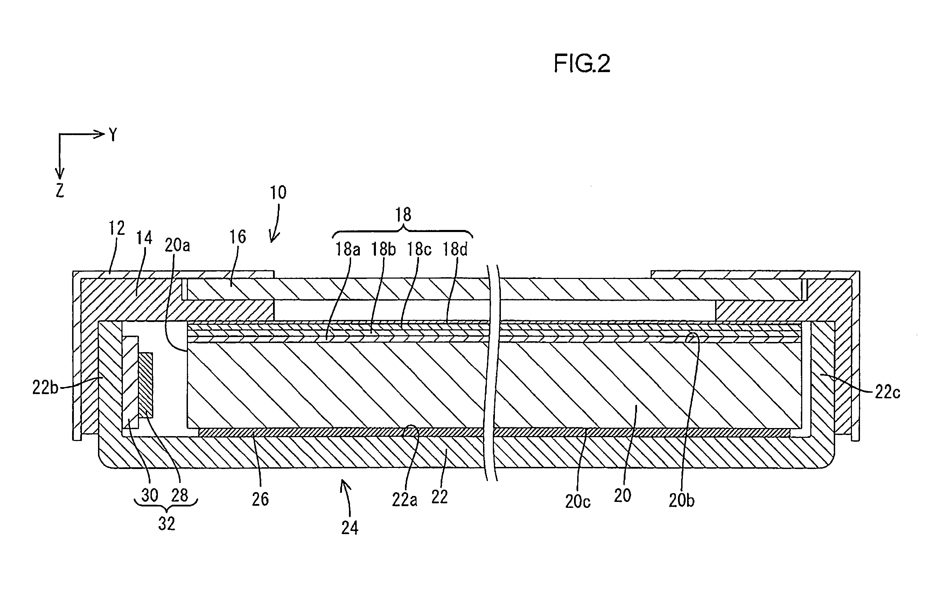

FIG. 2 is an exemplary vertical cross-sectional view of the liquid crystal display device 10. Here, it is assumed that the upper side illustrated in FIG. 2 is the front side and the lower side in the figure is the rear side. As illustrated in FIG. 2, the liquid crystal display device 10 is in a horizontally-long rectangular shape as a whole, and has a liquid crystal panel 16 as a display panel and the backlight unit 24 as an external light source. These two components are integrally held by a frame shaped bezel 12 or the like.

Next, the liquid crystal panel 16 will be explained. The liquid crystal panel 16 is configured such that a pair of transparent (i.e. high light transmissive) glass substrates are bonded with a predetermined gap therebetween and a liquid crystal layer (not illustrated) is enclosed between the both glass substrates. One glass substrate has: a switching component (e.g. TFT) connected to a source wiring and gate wiring that are orthogonal to each other; a pixel electrode connected to the switching component; an alignment film and the like. The other glass substrate has: a color filter in which color sections such as R (red), G (green) and B (blue) are in a predetermined arrangement; a counter electrode; an alignment film and the like. Among these, for example, for the source wiring, the gate wiring and the counter electrode, image data required to display an image and various control signals are supplied from a drive circuit board (not illustrated). Here, polarizing plates (not illustrated) are arranged in the outsides of the both glass substrates.

Next, the backlight unit 24 will be explained. As illustrated in FIG. 2, the backlight unit 24 includes a backlight chassis 22, an optical member 18 and a frame 14. The backlight chassis 22 has a substantially-box shape open to the front side (i.e. the light exit side or the side of the liquid crystal panel 16). The optical member 18 is mounted on the front side of a light guide plate 20 (i.e. the side of a light exit surface 20a). The frame 14 has a frame shape and holds the liquid crystal panel 16 along the inner edge thereof. Further, in the backlight chassis 22, an LED (Light Emitting Diode) unit 32 and the light guide plate 20 are housed. The LED unit 32 is arranged in one of the long-side side outer edges 22b of the backlight chassis 22, and outputs light. One of the side surfaces (i.e., light entrance surface) of the light guide plate 20 faces the LED unit 32 and guides light emitted from the LED unit 32 toward the liquid crystal panel 16. Furthermore, on the front side of the light guide plate 20, the optical member 18 is mounted. In the present embodiment, the backlight unit 24 employs a so-called edge light-type (or side light type), in which the light guide plate 20 and the optical member 18 are arranged immediately below the liquid crystal panel 16 and the LED unit 32 as a light source is arranged in a side edge portion of the light guide plate 20.

The backlight chassis 22 is made from metal such as an aluminum-based material and has a bottom plate 22a having a rectangular shape in a plan view and side plates 22b and 22c rising from each outer edge of both long and short sides of the bottom plate 22a to the front side. In the backlight chassis 22, a space facing the LED unit 32 is for housing the light guide plate 20. On the rear side of the bottom plate 22a, for example, a power supply circuit board supplying electric power to the LED unit 32 is attached.

The optical member 18 is formed by illuminating a diffuser 18a, a diffuser sheet 18b, a lens sheet 18c and a reflection type polarizing plate 18d in order from the side of the light guide plate 20. The diffuser sheet 18b, the lens sheet 18c and the reflection type polarizing plate 18d are configured to convert light emitted form the LED unit 32 and passing through the diffuser 18a to planar light. The liquid crystal panel 16 is arranged on the upper surface side of the reflection type polarizing plate 18d, and therefore the optical member 18 is arranged between the light guide plate 20 and the liquid crystal panel 16.

The light guide plate 20 is a rectangular and planar member formed with a resin capable of high light transmission (i.e. having a high transparency) such as acrylic. And the light guide plate 20 is held by the backlight chassis 22. As illustrated in FIG. 2, the light guide plate 20 is arranged between the LED unit 26 and one of the side plates 22c of the backlight chassis 22 such that a light exit surface 20b as a main plate surface faces the diffuser 18a. By this arrangement of the light guide plate 28, light output from the LED unit 26 enters the light entrance surface 20a of the light guide plate 28 and exits from the light exit surface 20b facing the diffuser 18a to radiate the liquid crystal panel 12 from the back side thereof.

On the side of an opposite surface 20c opposite to the light exit surface 20b of the light guide plate 20, the reflection sheet 26 is arranged. The reflection sheet 26 reflects light leaked from the light guide plate 20 to return the light back to the inside of the light guide plate 20. The reflection sheet 26 will be explained in detail with reference to other figures.

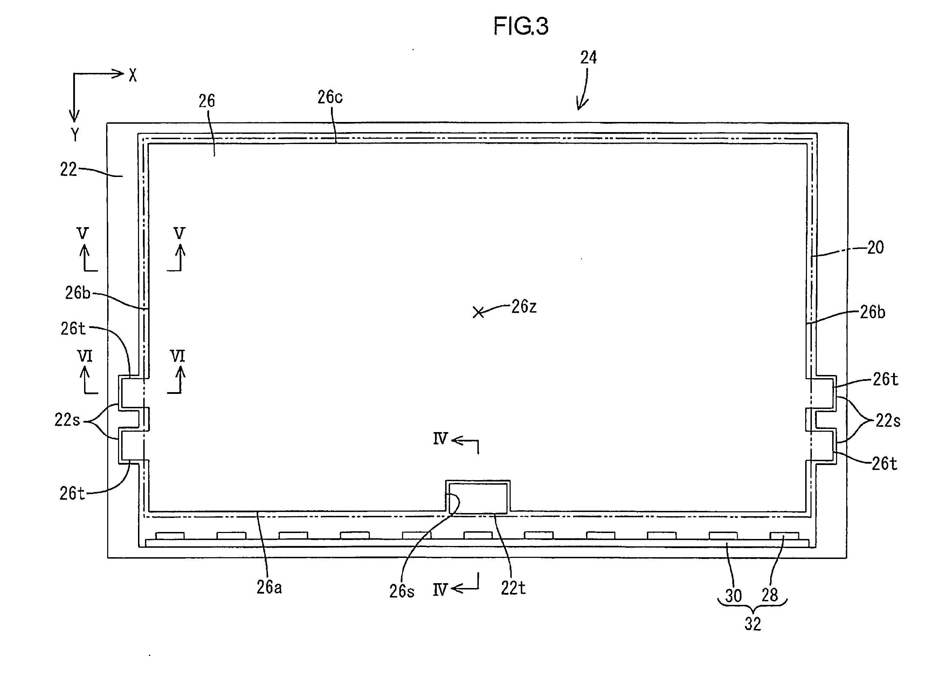

FIG. 3 is a front view of the backlight unit 24. Although the light guide plate 20 is arranged on the front side of the reflection sheet 26, FIG. 3 illustrates the light guide plate 20 as being transparent for explanation. As illustrated in FIG. 3, the LED unit 32 is configured such that a plurality of LED light sources 28 emitting white light are arranged in a line parallel to each other on the plastic LED board 30 of a rectangular shape. The LED light sources 28 face the light entrance surface 20a of the light guide plate 20. The LED unit 32 is fixed to one of the long-side outer edges 22b of the backlight chassis 22, for example by screw connection such that the LED light sources 28 face the light entrance surface 20a of the light guide plate 20.

As illustrated in FIG. 3, the reflection sheet 26 has a first side 26a exposed to the LED light sources 28, second sides 26b orthogonal to the first side 26a and a third side 26c opposite to the first side 26a. The first side 26a has a reflection sheet-side concave portion 26s of a partially concave shape. The second sides 26b have a reflection sheet-side convex portion 26t having a partially projecting shape. Each of two second sides 26b has two reflection sheet-side convex portions 26t. The third side 26c has no concave or convex portion.

The backlight chassis 22 has a chassis-side concave portion 22s and a chassis-side convex portion 22t. The chassis-side concave portion 22s faces the reflection sheet-side convex portion 26t and is concave toward a direction away from the reflection sheet 26. The chassis-side convex portion 22t faces the reflection sheet-side concave portion 26s and projects toward the opposite surface 20c of the light guide plate 20, and thereby the convex top surface 22t1 faces the opposite surface 20c.

In the backlight unit 24, the reflection sheet-side convex portion 26t is fitted to the chassis-side concave portion 22s and the chassis-side convex portion 22t is fitted to the reflection sheet-side concave portion 26s. As illustrated in FIG. 3, the light guide plate 20 is greater in plan view size than the reflection sheet 26 and the reflection sheet-side projected portion 26t is projected from the outer edge of the light guide plate 20.

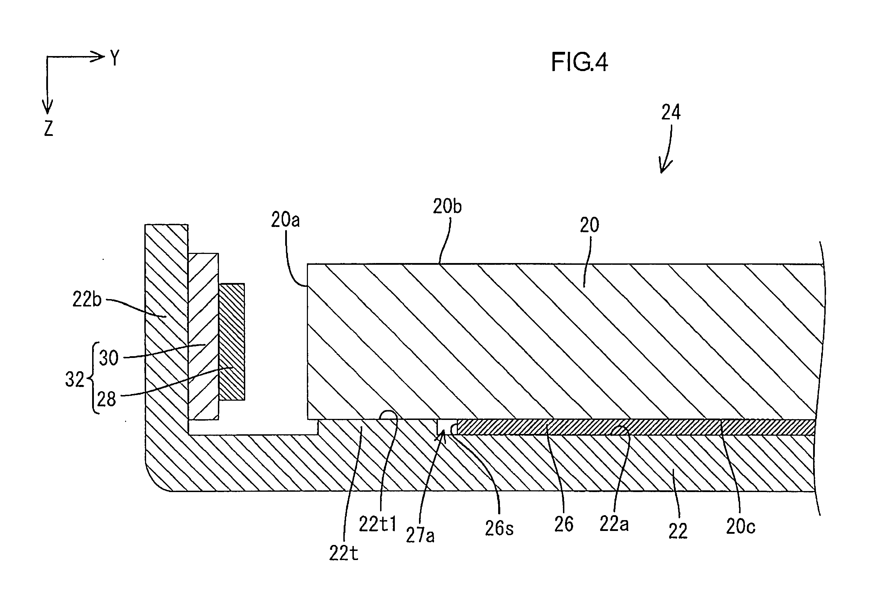

FIG. 4 is an enlarged cross-sectional view of a part of the backlight unit 24. The cross-sectional view in FIG. 4 illustrates a cross-sectional surface cut away along a line IV-IV of FIG. 3. As illustrated in FIG. 4, the chassis-side convex portion 22t projects from the bottom plate 22a of the chassis 22 toward the opposite surface 20c of the light guide plate 20 and is provided closer to the reflection sheet 26 than the opposite surface 20c of the light guide plate 20. Also, the chassis-side convex portion 22t is fitted to the reflection sheet-side concave portion 26s with a gap 27a therebetween.

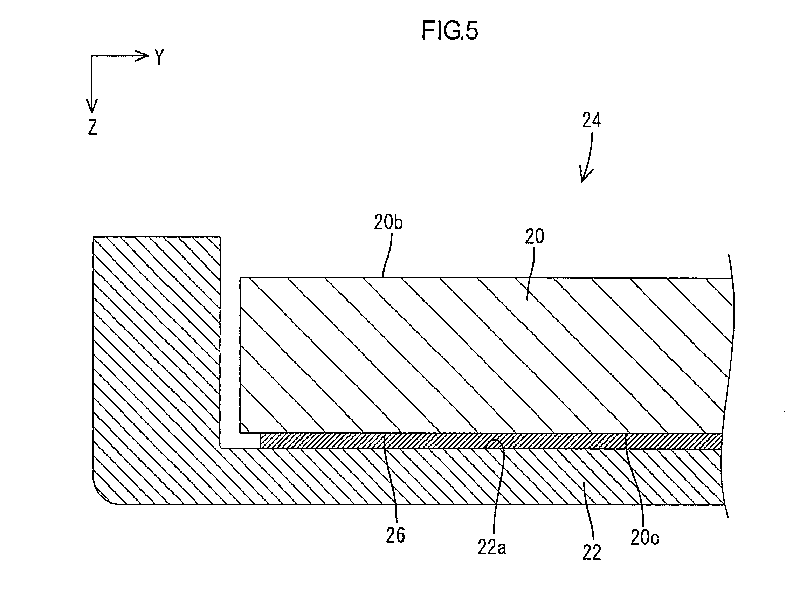

FIG. 5 is a cross-sectional view illustrating another part of the backlight unit 24 in the enlarged view. The cross-sectional view in FIG. 5 illustrates a V-V cross-sectional surface of FIG. 3. As illustrated in FIG. 5, the light guide plate 20 and the reflection sheet 26 overlap with each other on a plane surface in substantially the same range, excluding the area of the concave and convex portions of the reflection sheet 26.

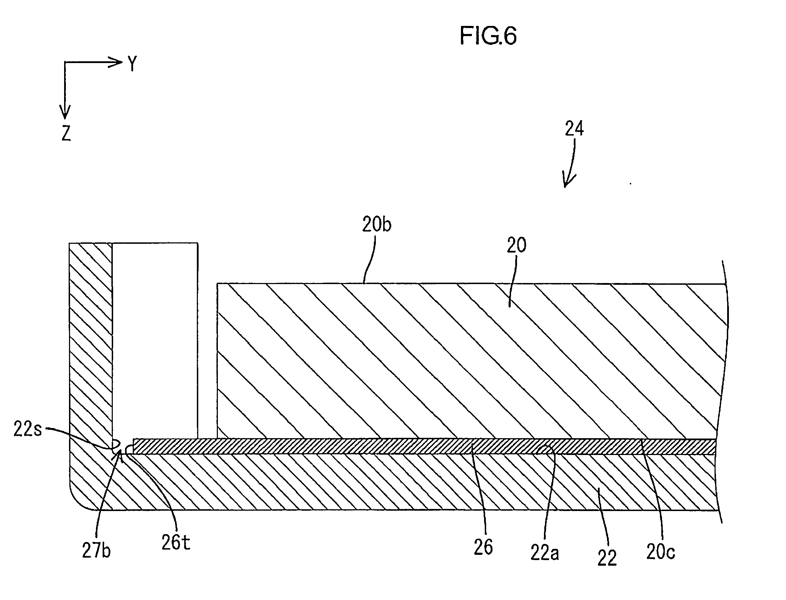

FIG. 6 is a cross-sectional view illustrating another part of the backlight unit 24 in the enlarged view. The cross-sectional view in FIG. 6 illustrates a cross-sectional surface cut away along the VI-VI of FIG. 3. As illustrated in FIG. 6, the reflection sheet-side convex portion 26t extends beyond the side surface of the light guide plate 20. Also, the reflection sheet-side convex portion 26t is fitted to the chassis-side concave portion 22s with a gap 27b therebetween.

The television receiver TV of the present embodiment has been explained in detail. In the backlight unit 24 of the television receiver TV according to the present embodiment, not only the side of the reflection sheet 26 orthogonal to the side thereof exposed to the side of the LED unit 32 (i.e. the second sides 26b) but also the side of the reflection sheet 26 exposed to the light source (i.e. the first side 26a) are fitted to the backlight chassis 22. By this configuration, the reflection sheet 26 is positioned with respect to the backlight chassis 22 in two orthogonal directions (i.e. X axis direction and Y axis direction). Therefore, the reflection sheet 26 is reliably positioned with respect to the backlight chassis 22. Further, the reflection sheet 26 and the backlight chassis 22 are fitted to each other with the gaps 27a and 27b therebetween. Therefore, even if a flexure or wrinkle occurs in the reflection sheet 26, it is possible to overcome the flexure or wrinkle from the reflection sheet 26.

Furthermore, in the above embodiment, the light guide plate 20 is supported by the backlight chassis 22, and the reflection sheet 26 is positioned with respect to the backlight chassis 22. Accordingly, the light guide plate 20 and the reflection sheet 26 are less likely to be relatively displaced. Therefore, it is possible to sufficiently fulfill the function of the reflection sheet 26 for directing the light leaked from the light guide plate 20 to enter the light guide plate 20 again.

When the chassis-side convex portion 22t is arranged along a thickness direction (i.e. Z axis direction) of the light guide plate 20, light emitted from the LED unit 32 toward the light entrance surface 20a may be interrupted by the chassis-side convex portion 22t to cause a dark portion in the light guide plate 20. In the backlight unit 24 of the present embodiment, since the chassis-side convex portion 22t is arranged closer to the side of the reflection sheet 26 than the opposite surface 20c of the light guide plate 20, the light emitted from the LED unit 32 toward the light entrance surface 20a is not interrupted by the chassis-side convex portion 22t. Therefore, even when the first side 26a of the reflection sheet 26 (i.e. the side on which the LED units 32 is arranged) is fitted to the chassis, the light from the LED unit 32 can enter the light entrance surface 20a without causing a dark portion in the light guide plate 20.

Also, when a convex portion is formed in the first side 26a of the reflection sheet 26, by approaching the LED unit 32 to the light entrance surface 20a of the light guide plate 20, the convex portion is arranged under the LED unit 32. Therefore, the reflection sheet 26 is positioned not only in two orthogonal directions (i.e. X axis direction and Y axis direction) but also in the thickness direction (i.e. Z direction) of the light guide plate 20. In this case, it is not possible to sufficiently overcome a flexure or wrinkle caused in the reflection sheet 26 near the LED unit 32. In the backlight unit 24 of the present embodiment, since the reflection sheet-side concave portion 26s is arranged in the first side 26a of the reflection sheet 26, it is possible to sufficiently overcome a flexure or wrinkle caused in the reflection sheet 26 near the LED unit 32 without positioning of the reflection sheet 26 in the thickness direction (i.e. z axis direction) of the light guide plate 20.

In the above embodiment, when the backlight chassis 22 is seen in a plan view, the light guide plate 20 covers the outer edge excluding the reflection sheet-side convex portion 26t of the reflection sheet 26. By this configuration, it is possible to have a sufficient gap between the reflection sheet 26 and the backlight chassis 22. In addition, in each side of the reflection sheet 26, it is possible to sufficiently overcome a flexure or wrinkle caused in the reflection sheet 26.

According to the above embodiment, while the reflection sheet 26 has the reflection sheet-side concave portion 26s and the reflection sheet-side convex portion 26t are arranged only in the first side 26a and the second sides 26b, there is no concave and convex portion in the third side 26c opposite to the first side 26a. By this configuration, the third side 26c is not fitted to the backlight chassis 22. Therefore, when a flexure or wrinkle occurs in the reflection sheet 26 due to heat deformation, it is possible to effectively overcome this flexure or wrinkle on the side of the third side 26c.

According to the above embodiment, the reflection sheet-side convex portion 26t is arranged closer to the LED unit 32 than a center 26z of the reflection sheet 26 on the side in which the reflection sheet-side convex portion 26t. By this configuration, it is possible to arrange the fitting part of the reflection sheet 26 and the backlight chassis 22 near the LED unit 32 to reduce light loss.

Also, according to the above embodiment, two or more reflection sheet-side convex portions 26t are arranged in each side. By this configuration, it is possible to increase the number of the fitting parts of the reflection sheet 26 and the backlight chassis 22, and thereby the reflection sheet 26 is effectively positioned with respect to the backlight chassis 22.

### <Second embodiment>

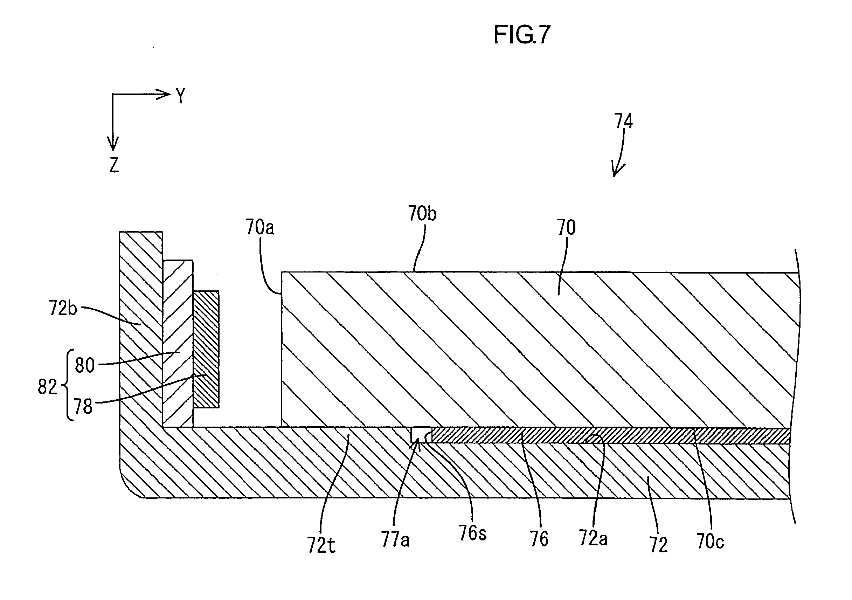

FIG. 7 is a cross-sectional view illustrating a part of the backlight unit 74 according to the second embodiment in the enlarged view. The second embodiment differs from the first embodiment in a form of the chassis-side convex portion 72t. The other configurations are the same as in the above first embodiment, explanation of the structures, operations and effects will be omitted. In FIG. 7, the same members as explained in the first embodiment have reference numerals obtained by adding number "50" to the reference numerals in FIG. 4. FIG. 7 illustrates a cross-sectional surface of a part corresponding to the part of the backlight unit 24 according to the first embodiment illustrated in FIG. 4.

In the backlight unit 74 of the second embodiment, a chassis-side convex portion 72t projects from a bottom plate 72a of a backlight chassis 72 toward an opposite surface 70c of a light guide plate 70 and extends from a bottom plate 72b of the backlight chassis 72 to a reflection sheet-side concave portion 76s. Even if the chassis-side convex portion 72t has this form, a reflection sheet 76 is reliably positioned with respect to the backlight chassis 72. In addition, even when the reflection sheet 76 has a flexure or wrinkle, it is possible to overcome a flexure or wrinkle caused in the reflection sheet 26.

### <Third embodiment>

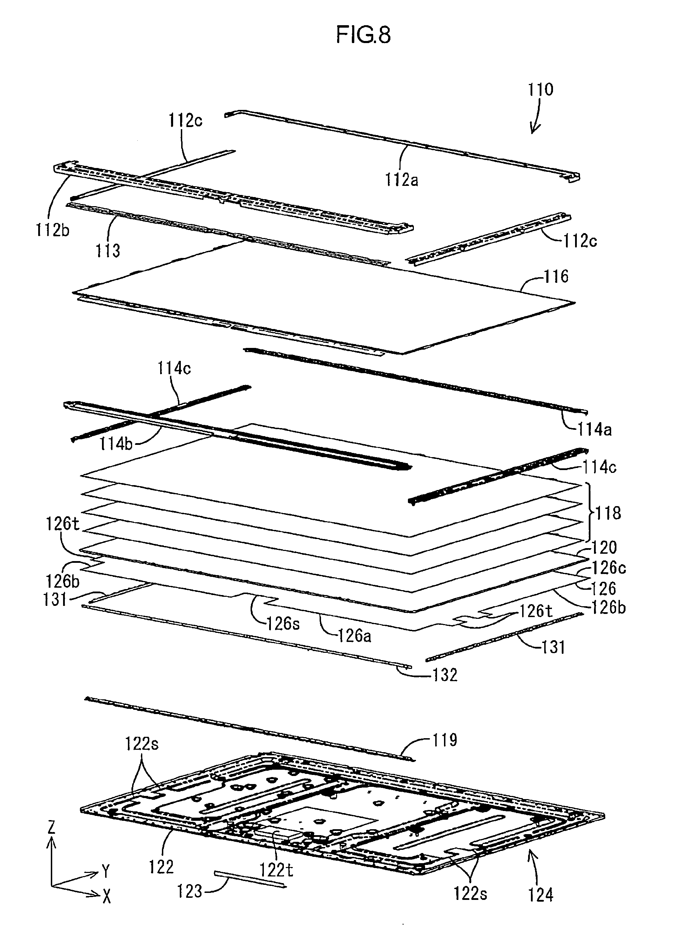

FIG. 8 is an exploded perspective view of a liquid crystal display device 110 according to the third embodiment. Here, it is assumed that the upper side illustrated in FIG. 8 is the front side and the lower side in the figure is the rear side. As illustrated in FIG. 8, the liquid crystal display panel 110 is in a horizontally-long rectangular shape as a whole, and has a liquid crystal panel 116 as a display panel and a backlight unit 124 as an external light source. These two components are integrally held by a top bezel 112a, a bottom bezel 112b, a side bezel 112c (hereinafter referred to as "bezel group 112a to 112c") and so on. It is noted that a configuration of the liquid crystal panel 116 is the same as the first embodiment, and therefore explanation will be omitted.

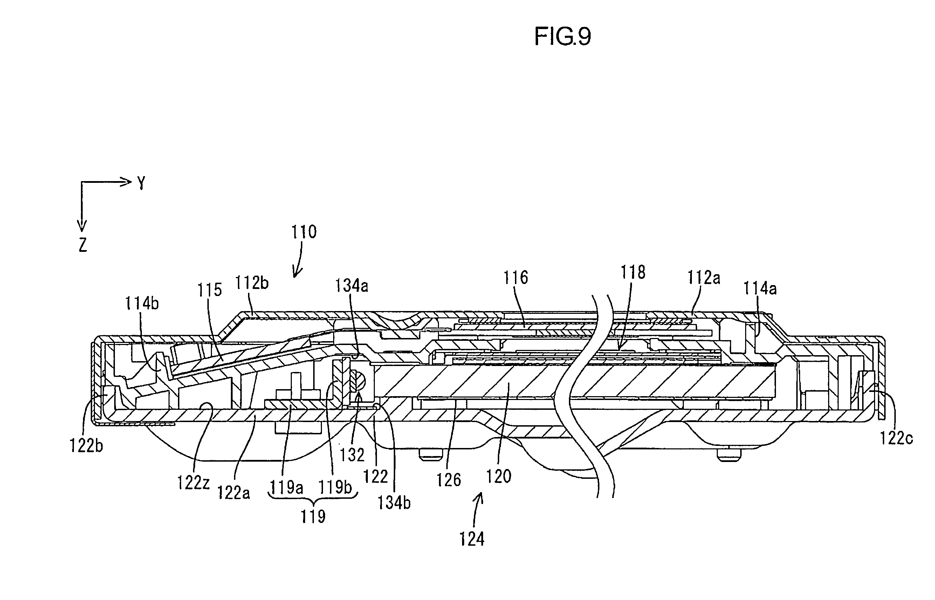

Hereinafter, the backlight unit 124 will be explained. As illustrated in FIG. 8, the backlight unit 124 includes a backlight chassis 122, an optical member 118, a top frame 114a, a bottom frame 114b, a side frame 114c (hereinafter referred to as "frame group 114a to 114c") and a reflection sheet 126. The liquid crystal panel 116 is sandwiched between the bezel group 112a to 112c and the frame group 114a to 114c. The reference numeral 113 indicates an insulating sheet insulating a drive circuit board 115 (see FIG. 9) driving the liquid crystal panel. The backlight chassis 122 has a substantially-box shape which has a bottom surface and is open to the front side (i.e. the light exit side or the side of the liquid crystal panel 116) . The optical member 118 is arranged on the front side of a light guide plate 120. The reflection sheet 126 is arranged on the rear side of the light guide plate 120. Further, the backlight chassis 122 houses a pair of cable holders 131, a heat radiation plate (or attached heat radiation plate) 119, an LED unit 132 and the light guide plate 120. On the rear surface of the backlight chassis 122, a power supply circuit board (not illustrated) supplying electric power to the LED unit 132, a protection cover 123 protecting the power supply circuit board and the like are provided. The pair of cable holders 131 is arranged along a short-side direction of the backlight chassis 122 and houses a wiring electrically connecting between the LED unit 132 and the power supply circuit board.

A configuration of the reflection sheet 126 is the same as in the first embodiment. A first side 126a of the reflection sheet 126 has a reflection sheet-side concave portion 126s and a second side 126b of the reflection sheet 126 has a reflection sheet-side convex portion 126t. Also, a configuration of the backlight chassis 122 is the same as in the first embodiment. The portion of the backlight chassis 122 facing the reflection sheet-side convex portion 126t has a chassis-side concave portion 122s, and the portion of the backlight chassis 122 facing the reflection sheet-side concave portion 126s has a chassis-side convex portion 122t. The reflection sheet-side convex portion 126t is fitted to the chassis-side concave portion 122s with a gap therebetween, and the chassis-side convex portion 122t is fitted to the reflection sheet-side concave portion 126s with a gap therebetween.

FIG. 9 is a vertical cross-sectional view of the backlight unit 124. The vertical cross-sectional view in FIG. 9 illustrates a cross-sectional configuration when the backlight unit 124 is cross-sectionally viewed on a Y-Z plane passing through the reflection sheet-side concave portion 126s. As illustrated in FIG. 9, the backlight chassis 122 is configured with a bottom plate 122a having a bottom surface 122z and side plates 122b and 122c shortly rising from an outer edge of the bottom plate 122a, and holds at least the LED unit 132 and the light guide plate 120. The heat radiation plate 119 is configured with a bottom surface portion 119a and a side surface portion 119b rising from one of the long-side side outer edges of the bottom surface portion 119a. The heat radiation plate 119 has a horizontal cross section of L shape, and is arranged along one of the long sides of the backlight chassis 122. The bottom surface portion 119a of the heat radiation plate 119 is fixed to the bottom plate 122a of the backlight chassis 122. The LED unit 132 extends along one of the long sides of the backlight chassis 122, and the light exit side of the LED unit 132 is fixed to the side surface portion 119b of the heat radiation plate 119 so as to face the light entrance surface of the light guide plate 120. Therefore, the LED unit 132 is held by the bottom plate 122a of the backlight chassis 122 via the heat radiation plate 119. The heat radiation plate 119 radiates heat generated in the LED unit 132 to the outside of the backlight unit 124 via the bottom plate 122a of the backlight chassis 122.

As illustrated in FIG. 9, the light guide plate 120 is arranged between the LED unit 132 and one of the side plates 122c of the backlight chassis. The LED unit 132, the light guide plate 120 and the optical member 118 are sandwiched between the frame group 114a to 114c and the backlight chassis 122. Also, as illustrated in FIG. 9, on the front side of the bottom frame 114b, the drive circuit board 115 is arranged. The drive circuit board 115 is electrically connected to the display panel 116 and supplies image data required to display an image and various control signals to the liquid crystal panel 116. Also, the light guide plate 120 has an elongated shape, and in a part of the front surface of the bottle frame 114b facing the LED unit 132, a reflection member 134a is arranged along a long-side direction (i.e. Y axis direction) of the light guide plate 120. Furthermore, in a part of the bottom surface 122z of the backlight chassis 122 facing the LED unit 132, a reflection member 134b is arranged along a long-side direction of the light guide plate 120.

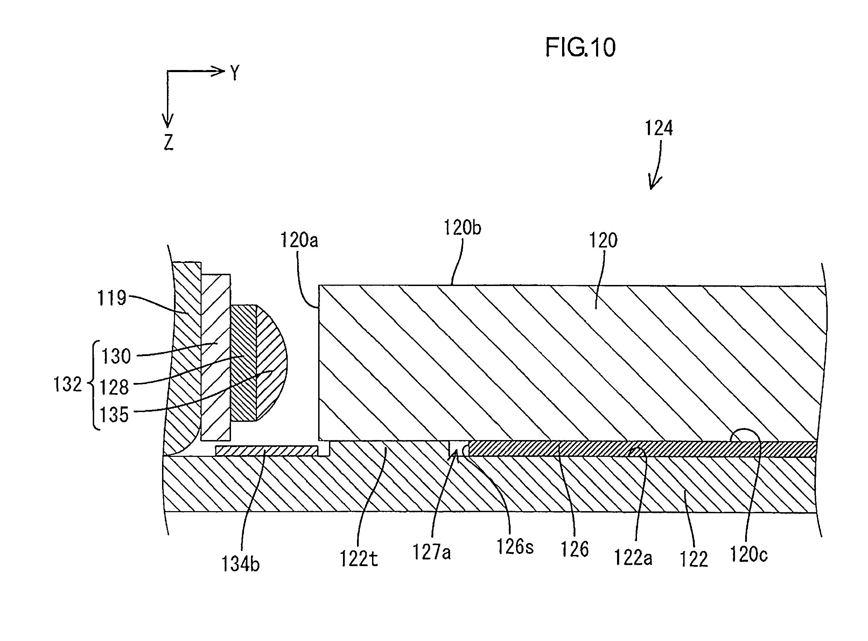

FIG. 10 is an enlarged cross-sectional view near the LED unit 132 in FIG. 9. As illustrated in FIG. 9, the chassis-side convex portion 122t is fitted to the reflection sheet-side concave portion 126s with a gap 127a therebetween. Also, the LED unit 132 is configured such that an LED light source 128 emitting white light is arranged on the LED board 130 and a hemispherical lens member 135 which is convex to the side of the light entrance surface 120a covers the light exit side of the LED light source 128.

According to the backlight unit of the present embodiment, by the reflection members 134a and 134b, light scattered from the LED unit 132 to the outside of the light guide plate 120 enters the light guide plate 120. By this configuration, it is possible to increase the entering efficiency of light emitted from the LED unit 132 to the light guide plate 120. Furthermore, by covering the light exit side of the LED light source 128 with the hemispherical lens member 135, light emitted from the LED light source 128 is diffused over a wide range by the lens member 135. Therefore, entering light of uniform brightness is obtained over the entire of the light entrance surface 120a of the light guide plate 120.

Corresponding relationships between the configurations of the embodiments and the configuration of the present invention will be described. The LED light sources 28, 46, 68 and 88 are one example of a "light source". Also, the backlight chassis 22, 72 and 122 are one example of a "chassis". Also, the backlight units 24 and 84 are one example of a "lighting device".

Variations of the above embodiments will be cited below by way of example.

(1) Although the above embodiments employ a configuration in which an LED light source emitting white light is mounted, for example, it may employ a configuration in which three kinds of red, green and blue LED light sources are surface-mounted or a configuration of combining a blue LED light source and a yellow phosphor. Alternatively, it may be possible to employ a linear light source such as a cold cathode tube.

(2) Regarding a reflection sheet-side concave portion, a reflection sheet-side convex portion, a chassis-side concave portion and a chassis-side convex portion, number, arrangement and form thereof are not limited.

(3) Although the above embodiments exemplify a liquid crystal display device using a liquid crystal panel as a display panel, the present invention is also applicable to display devices using other kinds of display panels.

(4) Although the above embodiments exemplify a television receiver having a tuner, the present invention is also applicable to a display device without a tuner.

Although embodiments of the present invention have been described above in detail, these are merely exemplifications and do not limit the scope of the claims. The techniques recited in the scope of the claims include above-exemplified specific examples with various variations and changes.

Also, the technical components described in the present specification and drawings show the technical utility in alone or in various combinations, and are not limited to combinations of the claims at the time of filing the present application. Also, the techniques exemplified in the present specification and drawings can achieve a plurality of objects at the same time and have the technical utility by achieving one of the objects.

### EXPLANATION OF SYMBOLS

TV: Television receiver
Ca, Cb: Cabinet
T: Tuner
S: Stand
10, 110: Liquid crystal display device
12: Bezel
14: Frame
16, 116: Liquid crystal panel
18, 118: Optical member
18a: Diffuser
18b: Diffuser sheet
18c: Lens sheet
18d: Reflection type polarizing plate
20, 70, 120: Light guide plate
20a, 70a, 120a: Light entrance surface
20b, 70b, 120c: Light exit surface
20c, 70c, 120c: Opposite surface
22, 72, 122: Backlight chassis
22a, 72a, 122a: Bottom plate
22b, 22c, 72b, 122b, 122c: Side plate
22s: Chassis-side concave portion
22t, 72t, 122t: Chassis-side convex portion
22t1: Convex top surface
24, 74, 124: Backlight unit
26, 76, 126: Reflection sheet
26a: First side
26b: Second side
26c: Third side
26s, 76s, 126s: Reflection sheet-side concave portion
26t: Reflection sheet-side convex portion
27a, 27b, 77a, 127a: Gap
28, 78, 128: LED light source
30, 80, 130: LED board
32, 82, 132: LED unit
112a: Top bezel
112b: Bottom bezel
112c: Side bezel
113: Insulating sheet
114a: Top frame
114b: Bottom frame
114c: Side frame
115: Drive circuit board
119: Heat radiation plate
119a: Bottom surface portion
119b: Side surface portion
123: Protection cover
131: Cable holder
134a, 134b: Reflection member
135: Lens member

## Claims

1. A lighting device comprising:
a light source;
a light guide plate having a side surface facing the light source as a light entrance surface through which light from the light source enters, a plate surface as a light exit surface from which light entering through the light entrance surface exit to outside, and an opposite surface that is a surface opposite to the light exit surface;
a reflection sheet having substantially a rectangular plan view shape and arranged on an opposite surface side of the light guide plate; and
a chassis housing the light source, the light guide plate and the reflection sheet and configured to support the light guide plate, wherein:
the reflection sheet includes a first side and a second side, the first side faces the light source and the second side is perpendicular to the first side;
the reflection sheet has a reflection sheet-side recess on the first side and has a reflection sheet-side projected portion on the second side, and the reflection sheet-side recess is partially recessed from the first side and the reflection sheet-side projected portion is partially projected from the second side;
the chassis includes a chassis-side recess and a chassis-side projected portion having a projected top surface, the chassis-side recess faces the reflection sheet-side projected portion and is recessed so as to be far away from the reflection sheet, and the chassis-side projected portion faces the reflection sheet-side recess and is projected toward the opposite surface of the light guide plate and the projected top surface faces the opposite surface;
the reflection sheet-side projected portion is fitted to the chassis-side recess with a gap therebetween; and
the chassis-side projected portion is fitted to the reflection sheet-side recess with a gap therebetween.

2. The lighting device according to claim 1, wherein the light guide plate is substantially greater in a plan view size than the reflection sheet and an outer edge of the reflection sheet-side projected portion is projected from an outer edge of the light guide plate.

3. The lighting device according to one of claims 1 and 2, wherein the reflection sheet further has a third side that is provided on a side opposite to the first side and the reflection sheet-side recess and the reflection sheet-side projected portion are provided only on the first side and the second side.

4. The lighting device according to any one of claims 1 to 3, wherein the reflection sheet-side projected portion is arranged on a portion of the second side that is closer to the light source than a middle portion of the second side.

5. The lighting device according to one of claims 1 to 4, wherein at least two reflection sheet-side projected portions are provided on the second side.

6. The lighting device according to any one of claims 1 to 5, further comprising a reflection member provided between the light source and the light guide plate, wherein:
the light entrance surface has an elongated shape; and
the reflection member is arranged along a longitudinal direction of the light entrance surface.

7. The lighting device according to any one of claims 1 to 6, further comprising a lens member configured to cover a light exit side of the light source, wherein:
the light source is a planer light source; and
the lens member is hemispherical to be convex toward the light entrance surface.

8. A display device comprising a display panel performing display using light from a lighting device according to any one of claims 1 to 7.

9. The display device according to claim 8, wherein the display panel is a liquid crystal panel using liquid crystal.

10. A television receiver comprising a display device according to one of claims 8 and 9.
